## Europäisches Patentamt

## European Patent Office

## Office européen des brevets

(19)

(11) Numéro de publication: **0 026 128**
**B1**

(12)

# FASCICULE DE BREVET EUROPEEN

(45) Date de publication du fascicule du brevet: **14.12.83**

(51) Int. Cl.³: **G 02 F 1/35, G 03 H 1/00**

(21) Numéro de dépôt: **80401283.9**

(22) Date de dépôt: **09.09.80**

(54) Dispositif d'enregistrement holographique et système optique de traitement d'information comportant un tel dispositif.

(30) Priorité: **21.09.79 FR 7923597**

(43) Date de publication de la demande:
**01.04.81 Bulletin 81/13**

(45) Mention de la délivrance du brevet:
**14.12.83 Bulletin 83/50**

(84) Etats contractants désignés:
**DE GB NL**

(56) Documents cités:
**US - A - 3 542 452**
**US - A - 3 604 604**

OPTICS LETTERS, vol. 4, no. 1, janvier 1979,
New York, US, J. HUIGNARD et al.: "Phase
conjugate wavefront generation via real time
holography in Bi12SiO20 crystals", pages 21-23
PROCEEDINGS OF THE 1978 INTERNATIONAL
OPTICAL COMPUTING CONFERENCE,
septembre 5-7, 1978, London GB 1979 IEEE,
New York US, J. HUIGNARD et al.: "Bismuth
Silicon Oxyde crystals and applications Real time
holographic recordings", pages 21-24
IEEE JOURNAL OF QUANTUM ELECTRONICS,
vol. QE-14, no. 9, septembre 1978, New York
US, A. YARIV: "Phase conjugate optics and real
time holography", pages 650-660

(73) Titulaire: **THOMSON-CSF**
**173, Boulevard Haussmann**
**F-75379 Paris Cedex 08 (FR)**

(72) Inventeur: **Huignard, Jean-Pierre**
**"THOMSON-CSF" SCPI 173, Bld Haussmann**
**F-75360 Paris Cedex 08 (FR)**

(74) Mandataire: **Wang, Pierre et al,**
**THOMSON-CSF SCPI 173, Bld Haussmann**
**F-75379 Paris Cedex 08 (FR)**

(56) Documents cités:
ĀPPLIED PHYSICS LETTERS, vol. 31, no. 9, 1er
novembre 1977, New York US, D. BLOOM ET
AL.: "Conjugate wave front generation and
image reconstruction by four wave mixing"
pages 592-594
APPLIED PHYSICS LETTERS, vol. 32, no. 12, 15
juin 1978, New York US, P. LIAO et al.: "CW
optical wave front conjugation by saturated
absorption atomic sodium vapor" pages 813-
815
OPTICS LETTERS, vol. 2, no. 3, mars 1978, New
York US, D. BLOOM et al.: "Observation of
amplified reflection by degenerate four wave
mixing in atomic sodium vapor", pages 58-60
"Principles of Holography", Howard M. Smith,
John Wiley + Sons, New York, page 13

Courier Press, Leamington Spa, England.

## Dispositif d'enregistrement holographique et système optique de traitement d'information comportant un tel dispositif

L'invention se rapporte au domaine de l'enregistrement holographique et a plus particulièrement pour objet un dispositif d'enregistrement holographique avec amplification de l'onde objet et un système de traitement d'information comportant un tel dispositif.

Dans les dispositifs d'enregistrement holographiques connus, l'hologramme d'un objet est enregistré à partie de l'onde objet diffractée par l'objet dont on souhaite enregistrer l'hologramme et d'une onde de référence correspondante. D'une manière générale, pour que l'hologramme ainsi enregistré soit de bonne qualité, le contraste des franges enregistrées étant tel que la restitution d'une image de l'objet au moyen d'un front d'onde de restitution soit effectuée dans de bonnes conditions, il est nécessaire d'utiliser un front d'onde objet qui avant éclairement de l'objet soit suffisament énergétique pour que le front d'onde objet diffracté interfère avec le front d'onde de référence dans le support d'enregistrement holographique dans de bonnes conditions. En général un compromis doit être trouvé entre l'énergie transportée par le faisceau objet et les qualités du support d'enregistrement pour obtenir une image de bonne qualité.

Les supports photosensibles conventionnels susceptibles d'être utilisés comme supports d'enregistrement holographique peuvent atteindre de grandes surfaces mais ils n'ont dans ce cas, que des qualités optiques moyennes et nécessitent pour l'obtention d'une image correcte une grande énergie d'inscription.

Des supports beaucoup plus performants, présentant une très haute résolution et ne nécessitant qu'une énergie d'inscription assez faible, ont été mis au point par exemple les cristaux électro-optiques et photoconducteurs type BSO, mais ils ne sont obtenus qu'en petites surfaces et ne peuvent donc permettre l'enregistrement tridimensionnel d'objets de très grandes surfaces.

De plus, dans les dispositifs d'enregistrement holographique usuels, la source utilisée doit avoir une longueur de cohérence suffisante pour que l'enregistrement des franges, obtenues par superposition dans le matériau des fronts d'onde objet et référence, soit effectué dans des conditions optimum quant à leur contraste.

L'invention a pour objet un dispositif d'enregistrement holographique permettant d'effectuer l'enregistrement d'hologrammes d'objets de très grande surface et utilisant des supports photosensibles de qualité moyenne mais disponibles en grandes dimensions, ce dispositif ne nécessitant qu'une source ayant une longueur de cohérence réduite.

Suivant l'invention, de dispositif d'enregistrement ho'ographique comportant une source lumineuse, un dispositif optique formant à partir de l'onde lumineuse émise par la source une onde objet et une onde de référence, et un support d'enregistrement holographique, est caractérisé en ce qu'il comporte en outre une cellule d'amplification recevant l'onde objet diffractée par l'objet à analyser sur l'une de ses faces, afin qu'il émerge de ladite face une onde objet amplifiée; ladite onde objet amplifiée résultant de l'interaction non linéaire au sein d'un milieu contenu dans ladite cellule de l'onde objet incidente avec des ondes de pompage contra-progressives de même fréquence que l'onde objet; ladite onde objet amplifiée étant conjuguée de l'onde object incidente; lesdites ondes de pompage contra-progressives pénétrant dans ladite cellule selon deux faces opposées et perpendiculaires à la face recevant l'onde objet; ce dispositif d'enregistrement comportant de plus des moyens optiques dirigeant l'onde objet amplifiée et l'onde de référence vers le support holographique pour l'enregistrement.

L'invention sera mieux comprise et d'autres caractéristiques apparaîtront à l'aide de la description qui suit en référence aux figures annexées.

La figure 1 représente schématiquement une cellule d'amplification utilisable dans le dispositif d'enregistrement selon l'invention;

La figure 2 représente schématiquement le dispositif d'enregistrement holographique selon l'invention.

Pour l'enregistrement d'hologrammes d'objets de grande surface, le premier problème à résoudre est l'éclairement de l'objet; en effet, pour que l'onde diffractée par l'objet puisse être utilisée pour interférer avec l'onde de référence dans le support d'enregistrement, il faut que l'énergie transportée par cette onde et captée par le système optique soit suffisante, ce qui ne peut être réalisé qu'avec un faisceau objet indident de très grande energie lorsque la surface d'onde est très étendue. En effet, seule une très faible partie du rayonnement est captée, de l'ordre de $10^{-3}$ à $10^{-4}$ fois l'énergie incidente.

Pour éviter ce problème, le dispositif selon l'invention comporte un dispositif d'amplification du front d'onde diffracté par l'objet, le front d'onde amplifié étant seulement alors dirigé vers le support d'enregistrement holographique pour y interférer avec le front d'onde de référence.

Le document Optics Letters, volume 2, n° 3, mars 1978, pages 58 à 60 décrit un amplificateur à milieu non linéaire fonctionnant selon le principe de l'effet KERR. Une réflexion d'onde amplifiée est produite par interaction à quatre ondes.

Du fait de cette amplification, le faisceau incident sur l'objet peut ne transporter qu'une énergie assez faible, et cependant l'enregistrement holographique est obtenu dans de très bonnes conditions sur un support holographique conventionnel.

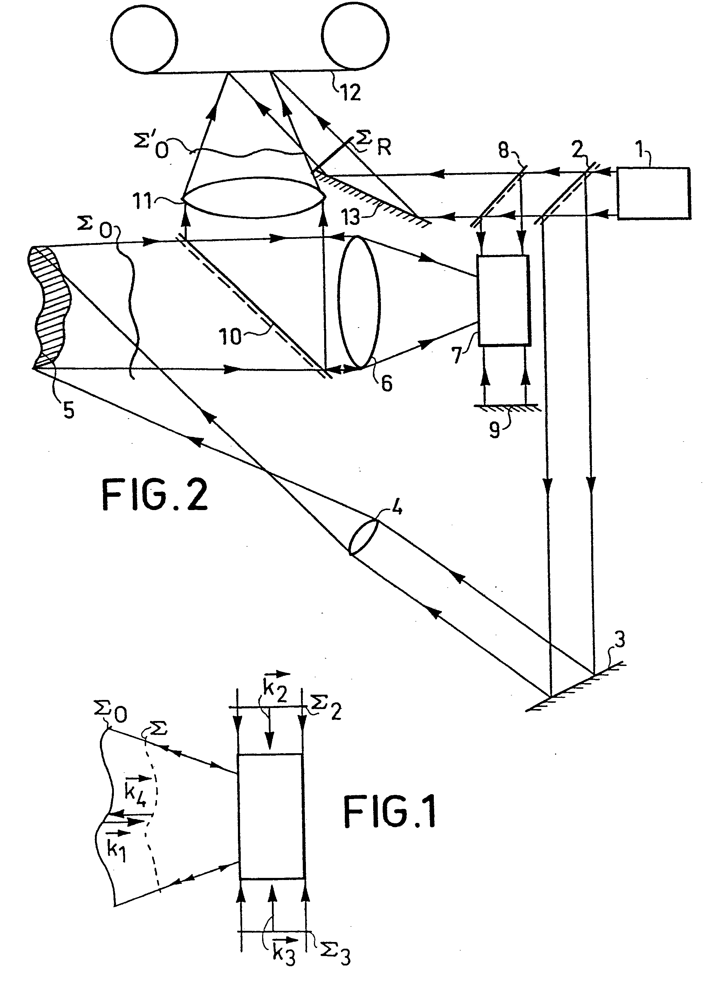

Le dispositif d'amplification représenté schématiquement sur la figure 1, comporte un milieu d'intéraction non linéaire tel qu'une onde objet incidente $\Sigma_o$ de vecteur d'onde $\vec{K}_1$ et deux ondes de "pompe" planes $\Sigma_2$ et $\Sigma_3$ de même longueur d'onde que l'onde objet de vecteurs d'onde $\vec{K}_2$ et $\vec{K}_3$ tels que $\vec{K}_2+\vec{K}_3=0$ (se propageant donc dans des directions opposées), interagissent dans le milieu non linéaire pour générer une onde $\Sigma_4$ de vecteur d'onde $\vec{K}_4$ conjuguée de l'onde objet incidente $\Sigma_o$. Lorsque le coefficient de couplage du milieu d'interaction et la longueur d'interaction sont convenablement choisis, l'onde $\Sigma_4$ est amplifiée par rapport à l'onde incidente $\Sigma_o$, cette amplification s'effectuant par transfert d'énergie des ondes pompes vers l'onde conjuguée de l'onde objet incidente. Pour cels, il est nécessaire que les deux ondes de pompage $\Sigma_2$ et $\Sigma_3$ soient suffisamment énergétiques, de façon que la polarisation diélectrique du matériau induite par ces champs électriques de grandes intensités permette par mélange non linéaire le transfert d'énergie vers le front d'onde conjugué.

Le milieu d'interaction non linéaire peut être une cellule à vapeur de sodium ou à sulfure de carbone $CS_2$ par exemple. Dans un tel milieu, avec des ondes de longueur d'onde $\lambda=5890$ Å, lorsque la longueur d'interaction est L=5 cm et que les faisceaux pompe ont une intensité de l'ordre de 40 KW/cm², la source étant un laser pulsé dont les impulsions limineuses durent 6 ns, le coefficient d'amplification de l'onde conjuguée par rapport à l'onde incidente peut être de l'ordre de 100.

Toutes les ondes ayant la même longueur d'onde, le milieu se comporte comme un amplificateur d'image multimode dans lequel l'adaptation de phase est toujours réalisée.

Une telle cellule d'amplification non linéaire ne possède aucun effet de rémanence, la restitution d'un front d'onde conjugué du front d'onde incident peut donc être obtenue en continu pendant une durée non limitée. Une telle propriété est particulièrement intéressante lorsque l'on souhaite effectuer une succession d'enregistrements holographiques correspondant à des images d'un objet en mouvement, le front d'onde diffracté par l'object variant de manière continue et le front d'onde conjugué amplifié par la cellule d'amplification non linéaire suivant alores les mêmes variations.

Le dispositif d'enregistrement holographique représenté sur la figure 2 comporte un tel dispositif d'amplification.

Ce dispositif d'enregistrement comporte une source laser 1 à partir de laquelle sont formés tous les faisceaux utiles, c'est à dire le faisceau incident sur l'objet, les faisceaux "pompes", pour le dispositif d'amplification non linéaire, et le faisceau de référence dirigé vers le support d'enregistrement holographique. Le dispositif optique permettant de former ces différents faisceaux est décrit ci-après de manière non limitative. Il comporte un séparateur de faisceau 2 permettant de former par réflexion le faisceau incident sur l'objet; ce faisceau est dirigé vers l'objet 5 au moyen d-un miroir 3 et l'ouverture nécessaire lui est donnée par une lentille 4. Le faisceau diffracté par l'objet 5, dont la surface d'onde est $\Sigma_o$, est dirigé vers la cellule d'amplification non linéaire à travers une lentille convergente 6. La cellule d'amplification 7 reçoit également les faisceaux pompes obtenus par réflexion sur le séparateur de faisceau 8 du faisceau transmis par le séparateur de faisceau 2. Pour obtenir deux faisceaux pompes dont les vecteurs d'onde soient opposés, le dispositif comporte un miroir de renvoi 9 renvoyant vers le milieu d'interaction non linéaire le faisceau qui a traversé ce même milieu. Le front d'onde résultant de l'interaction non linéaire est, comme expliqué ci-dessus, un front d'onde conjugué du front d'onde incident sur la cellule d'amplification, c'est-à-dire se propageant dans une direction opposée mais ayant la même forme, amplifié par rapport au front d'onde objet.

Le faisceau correspondant traverse la lentille 6, est réfléchi par un séparateur de faisceau 10 et dirigé vers un support d'enregistrement holographique 12 à travers un système optique représenté sur la figure sous la forme d'une lentille convergente 11. Le front d'onde $\Sigma_o'$ incident sur le support holographique et comportant toutes les informations relatives à l'objet, y interfère avec un faisceau de référence dont la surface $\Sigma_R$ d'onde est plane; ce faisceau de référence est le faisceau transmis par le séparateur de faisceau 8 et réfléchi par un miroir plan 13. Ce dispositif d'enregistrement est tel que la longueur de cohérence de la source laser 1 peut être réduite par rapport à un dispositif conventionnel; en effet, cette longueur de cohérence est à apprécier par les différences de longueur de propagation entre le faisceau de référence et le faisceau amplifié au moment de l'inscription holographique. Le support photosensible 12 utilisé peur être un support classique type émulsion photographique; dans ce cas, une phase de développement doit être prévue, avant que le front d'onde objet enregistrée puisse être restitué par exposition à un rayonnement de restitution.

Un tel dispositif d'enregistrement peur être utilisé dans un système de visualisation de déformations de structures en mouvement par interférométrie holographique, pour le contrôle non destructif des ces structures.

En effet, dans de tels systèmes, un hologramme d'un objet est enregistré à un instant donné, et une image holographique est restituée à partie de l'hologramme à un autre instant; des interférences sont crées par interférométrie entre le front d'onde restitué et un front d'onde de comparaison correspondant par exemple à l'image de l'objet non déformé, ces interférences représentant les déformations subies par la structure entre les deux états correspondant aux deux fronts d'onde. Ces systèmes de visualisation peuvent mettre en oeuvre différentes méthodes: l'interférométrie peut être "en temps réel", c'est'à-dire qu'une image holographique resituée formant surface d'onde de référence est superposée à l'objet lui-même, les franges crées par cette superposition étant caractéristiques de la déformation du front d'onde et les variations de ces franges dans le temps observables en temps réel suivant les déformations de la structure; l'interférométrie peut également être par "double exposition", les franges d'interférence correspondant à la déformation étant obtenues par superposition à un instant donné de deux images holographiques restituées simultanément correspondant à des hologrammes enregistrés à des instants différents.

Compte tenu de l'amplification de l'onde objet, des hologrammes d'objets de grandes dimensions peuvent être obtenus et toutes les opérations d'optique cohérente utilisant des fronts d'onde restitués à partir d'hologrammes deviennent possibles pour de tels objets.

Le dispositif d'enregistrement holographique peut également être utilisé par exemple dans les systèmes optiques de traitement d'information type corrélateurs optiques.

L'invention n'est pas limitée au mode de réalisation précisément décrit. En particulier, la source de lumière utilisée peur être un laser pulsé ou continu, la cellule d'amplification fonctionnant avec les deux types des source. De plus, comme indiqué ci-dessus, le dispositif optique représenté pour former les différents faisceaux utiles n'est qu'un mode de réalisation possible.

Enfin la cellule d'amplification peur comporter un autre matériau ayant un coefficient de susceptibilité non linéaire convenable, par exemple du sulfure de carbone ou du germanium.

**Revendications**

1. Dispositif d'enregistrement holographique comportant une source lumineuse (1), un dispositif optique (2, 3, 4, 13) formant à partie de l'onde lumineuse émise par la source (1) une onde objet ($\Sigma$o) diffractée par l'objet à analyser (5) et une onde de référence ($\Sigma_R$), et un support d'enregistrement holographique (12), caractérisé en ce qu'il compote en outre une cellule d'amplification (7) recevant ladite onde objet ($\Sigma$o) sur l'une de ses faces, afin qu'il émerge de ladite face une onde objet amplifiée ($\Sigma$'o), ladite onde objet amplifiée résultant de l'interaction non linéaire au sein d'un milieu contenu dans ladite cellule (7) de l'onde objet ($\Sigma$o) incidence avec deux ondes de pompage contra-progressives ($\Sigma_2$, $\Sigma_3$) de même fréquence que l'onde objet ($\Sigma$o), ladite onde objet amplifiée ($\Sigma$'o) étant conjuguée de l'onde objet incidence ($\Sigma$o); lesdites ondes de pompage contra-progressives ($\Sigma_2$ $\Sigma_3$) pénétrant dans ladite cellule (7) selon deux faces opposées et perpendiculaires à la face recevant l'onde objet; ce dispositif d'enregistrement comportant de plus des moyens optiques (10, 11) dirigeant l'onde objet amplifiée ($\Sigma$'o) et l'onde de référence ($\Sigma_R$) vers le support holographique (12) pour l'enregistrement.

2. Dispositif selon la revendication 1, caractérisé en ce que la cellule d'amplification (7) est une cellule de mélange non linéaire comportant un milieu non linéaire du type vapeur de sodium, sulfure de carbone, ou germanium.

3. Dispositif selon la revendication 1, caractérisé en ce que les deux ondes de pompage contra-progressives ($\Sigma_2$, $\Sigma_3$) sont obtenues à partir de la même source lumineuse (1) que l'onde objet ($\Sigma$o) et l'onde de référence ($\Sigma_R$).

4. Dispositif selon la revendication 1, caractérisé en ce qu'une onde de pompage ($\Sigma_2$) étant dirigée vers la cellule d'amplification (7), la seconde onde de pompage ($\Sigma_3$) est obtenue par réflexion de l'onde transmise par le milieu par un miroir (9) parallèle à la surface d'onde ($\Sigma_2$).

5. Système optique de traitement d'information utilisant des hologrammes pour restituer l'information, caractérisé en ce qu'il comporte un dispositif d'enregistrement holographique selon l'une quelconque des revendications précédentes.

**Patentansprüche**

1. Holografische Speichervorrichtung, mit einer Lichtquelle (1), einer optischen Vorrichtung (2, 3, 4, 13), die aus der von der Quelle (1) ausgesandten Lichtwelle eine am zu analysierenden Objekt (5) gebeugte Objektwelle ($\Sigma_o$) und eine Referenzwelle ($\Sigma_R$) bildet, und mit einem holografischen Aufzeichnungsträger (12), dadurch gekennzeichnet, daß sie außerdem eine Verstärkungszelle (7) aufweight, die auf einer ihrer Seiten die Objectwelle ($\Sigma_0$) empfängt, so daß von dieser Seite eine verstärkte Objektwelle ($\Sigma'_0$) ausgeht, die aus der nichtlinearen Interaktion in einem der der Zelle (7) enthaltenen Mittel zwischen der ankommendem Objektwelle ($\Sigma_0$) und zwei in Gegenrichtung fortschreitenden Pumpwellen ($\Sigma_2$, $\Sigma_3$) gleicher Frequenz wie die Objectwelle ($\Sigma_0$) resultiert, wobei die verstärkte Objectwelle ($\Sigma'_0$) zur ankommenden Objektwelle ($\Sigma_0$) konjugiert ist und die in Gegenrichtung fortschreitenden Pumpwellen ($\Sigma_2$, $\Sigma_3$) in die Zelle (7) über zwei einander gegenüberliegende und zur die Objektwelle empfangenden Seite senkrechte Seiten eintreten, und daß die Speichervorrichtung außerdem optische Mittel (10, 11) aufweist, die die verstärkte Objektwelle ($\Sigma'_0$) und die Referenzwelle

($\Sigma_R$) zur Aufzeichnung auf den holografishen Träger (12) richtet.

2. Vorrichtung nach Anspruch 1, dadurch gekennzeichnet, daß die Verstärkungszelle (7) eine nichtlineare Mischzelle ist, die ein nichtlineares Mittel von Typ Natriumdampf, Schwefelkohlenstoffdampf oder Germaniumdampf entaﬁlt.

3. Vorrichtung nach Anspruch 1, dadurch gekennzeichnet, daß die beiden in Gegenrichtung fortschreitenden Pumpwellen ($\Sigma_2$, $\Sigma_3$) ausgehend von derselben Lichtquelle (1) wie die Objektwelle ($\Sigma_0$) und die Referenzwelle ($\Sigma_R$) erhalten werden.

4. Vorrichtung nach Anspruch 1, dadurch gekennzeichnet, daß eine der Pumpwellen ($\Sigma_2$) auf die Verstärkungszelle (7) gerichtet ist, während die zweite Pumpwelle ($\Sigma_3$) durch Reflexion der von dem Mittel übertragenen Welle an einem zur Wellenebene ($\Sigma_2$) parallelen Spiegel (9) erhalten wird.

5. Optisches Informationsverarbeitungssystem, das Hologramme für die Wiedergabe der Information verwendet, dadurch gekennzeichnet, daß es eine holografische Speichervorrichtung nach einem beliebigen der vorhergehenden Ansprüche aufweist.

**Claims**

1. A holographic recording device comprising a light source (1), an optical device (2, 3, 4, 13) which forms from the light wave emitted by the source (1) an object wave ($\Sigma_0$) diffracted by the object (5) to be analyzed, and a reference wave ($\Sigma_R$), and comprising a holographic recording support (12), caracterized in that it also comprises an amplification cell (7) receiving the object wave ($\Sigma_0$) via one of its faces such that an amplified object wave ($\Sigma_0'$) emerges from said face, resulting from the non linear interaction in a medium contained in the cell (7) between the incident object wave ($\Sigma_0$) and two counter progressive pumping waves ($\Sigma_2$, $\Sigma_3$) which show the same frequency as the object wave ($\Sigma_0$), said amplified object wave ($\Sigma_0'$) being conjugate of the incident object wave ($\Sigma_0$), the counter progressive pumping waves ($\Sigma_2$, $\Sigma_3$) ehtering into said cell (7) via two mutually opposite faces which are perpendicular to the face receiving the object wave, and that the recording device further comprises optical means (10, 11) which direct the amplified object wave ($\Sigma_0'$) and the reference wave ($\Sigma_R$) towards the holographic support (12) for recording purposes.

2. A device according to claim 1, characterized in that the amplification cell (7) is a non linear mixing cell incorporating a non linear medium of the sodium, carbonsulphide or germanium vapour type.

3. A device according to claim 1, characterized in that the two counter progressive pumping waves ($\Sigma_2$, $\Sigma_3$) are obtained from the same light source (1) as the object wave ($\Sigma_0$) and the reference wave ($\Sigma_R$).

4. A device according to claim 1, characterized in that one of the pumping waves ($\Sigma_2$) being directed to the amplification cell (7), the second pumping wave ($\Sigma_3$) is obtained by refraction of the wave transmitted by the medium from a mirror (9) which is parallel to the surface of the wave ($\Sigma_2$).

5. An optical system for information processing using holograms for the restoration of the information, characterized in that it comprises a holographic recording device according to any one of the preceding claims.

FIG.2

FIG.1